# EUROPÄISCHE PATENTSCHRIFT

(11) **EP 0 697 559 B1**
(45) Veröffentlichungstag und Bekanntmachung des Hinweises auf die Patenterteilung: **15.12.1999**
(21) Anmeldenummer: 95112729.9
(22) Anmeldetag: 12.08.1995
(51) Int. Cl.: F16L 59/06

(54) **Hitzeschild und Verfahren zur Herstellung eines Hitzeschildes**
Heat shield and method of making a heat shield
Bouclier thermique et procédé de fabrication d'un bouclier thermique

(30) Priorität: 17.08.1994 DE 4429104
(43) Veröffentlichungstag der Anmeldung: 21.02.1996
(73) Patentinhaber: Pirchl, Gerhard, 5708 Birrwil (CH)
(72) Erfinder: Pirchl, Gerhard, 5708 Birrwil (CH)
(74) Vertreter: Riebling, Peter, Dr.-Ing.

(56) Entgegenhaltungen:
- EP-A- 0 439 046
- DE-A- 2 549 722
- DE-U- 9 203 734
- FR-A- 2 193 170
- GB-A- 762 800
- US-A- 1 789 819

## Beschreibung

Gegenstand der Erfindung ist ein Hitzeschild und ein Verfahren zur Herstellung eines Hitzeschildes nach dem Oberbegriff des Patentanspruchs 1.

Derartige Hitzeschilder werden im Automobilbereich eingesetzt, um eine Wärmeisolation, z.B. zwischen einem Auspuff, einem Katalysator und den gegenüberliegenden Fahrzeugteilen, z.B. einem Fahrzeugboden oder dergleichen, zu erreichen.

Mit dem Gegenstand der EP 0 439 046 ist es bekannt, ein derartiges Hitzeschild aus einem Folienpaket zu schaffen, wobei im wesentlichen eine Matte vorhanden ist, welches aus einer Mehrzahl von Metallfolien besteht, die einen Stapel bilden, und die Schichten übereinander in einer vertikalen Richtung angeordnet sind.

Die Metallfolien sind hierbei genoppt, um zwischen den einzelnen Lagen der Metallfolien Luftzwischenräume zu bilden, welche die Isolationswirkung dieser Matte wesentlich verbessern sollen.

Bei dem Gegenstand der EP 0 439 046 ist jedoch die Isolierwirkung nicht optimal, weil die genoppten Metallfolien unmittelbar an dem Trägerblech aufliegen und hierdurch ein unerwünschter Wärmeübergang geschaffen wird. Außerdem sind sämtliche Folien am Rand miteinander verbunden, was zu einer hohen Wärmeentwicklung führt.

Der Erfindung liegt deshalb die Aufgabe zugrunde, die Wärmeisolationswirkung eines derartigen Hitzeschildes (Matte) wesentlich zu verbessern.

Zur Lösung der gestellten Aufgabe ist die Erfindung durch die technische Lehre des Anspruchs 1 gekennzeichnet.

Wesentliches Merkmal der Erfindung ist, daß in den Luftzwischenraum ein Folienstapel eingelegt ist, wobei es wichtig ist, daß dieser Folienstapel nicht mit dem Rand des Trägerblechs in Berührung kommt, um eine unerwünschte Wärmeleitung von dem heißen Trägerblech auf den im Luftzwischenraum eingelegten Folienstapel zu verhindern.

Versuche des Anmelders haben ergeben, daß der Luftzwischenraum nach der Erfindung die Isolationswerte stark verbessert.

So hat sich z.B. herausgestellt, daß, um einen gewissen Isolationswert zu erhalten, es notwendig ist, etwa vier genoppte Folien als Paket über ein Trägerblech anzuordnen.

Mit der Verwendung des Hitzeschildes und dem Verfahren zu dessen Herstellung werden nur noch zwei genoppte Metallfolien mit ansonsten gleichem Aufbau benötigt.

Es wird in einer Ausgestaltung der Erfindung bevorzugt, wenn das Aluminiumblech an seiner, der Hitzequelle zugewandten, Seite hochpoliert ist, um eine noch bessere Wärmeabführung zu gewährleisten.

Im folgenden wird die Erfindung anhand von mehrere Ausführungswege darstellende Zeichnungen näher erläutert. Hierbei gehen aus den Zeichnungen und ihrer Beschreibung weitere Vorteile der Erfindung hervor.

Es zeigen:
- Figur 1:: schematisiert im Schnitt eine Teilansicht durch ein Hitzeschild nach der Erfindung,
- Figur 2:: die Draufsicht in Richtung des Pfeiles II in Figur 1,
- Figur 3:: den Schnitt durch ein Hitzeschild (gehört nicht zur Erfindung),
- Figur 4:: schematisiert einen Teilschnitt durch ein Hitzeschild (gehört nicht zur Erfindung),
- Figur 5:: schematisiert einen Teilschnitt durch ein Hitzeschild (gehört nicht zur Verbindung),
- Figur 6:: Draufsicht auf eine abgewandelte Ausführungsform eines Trägerbleches,
- Figur 7:: eine gegenüber Figur 6 abgewandelte Ausführungsform,
- Figur 8:: eine gegenüber Figur 6 abgewandelte Ausführungsform,
- Figur 9:: eine gegenüber Figur 6 abgewandelte Ausführungsform.

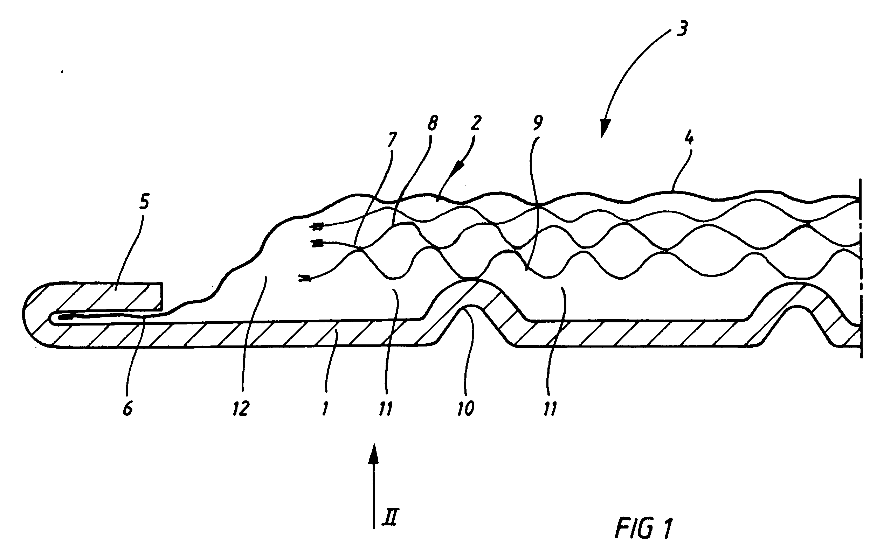

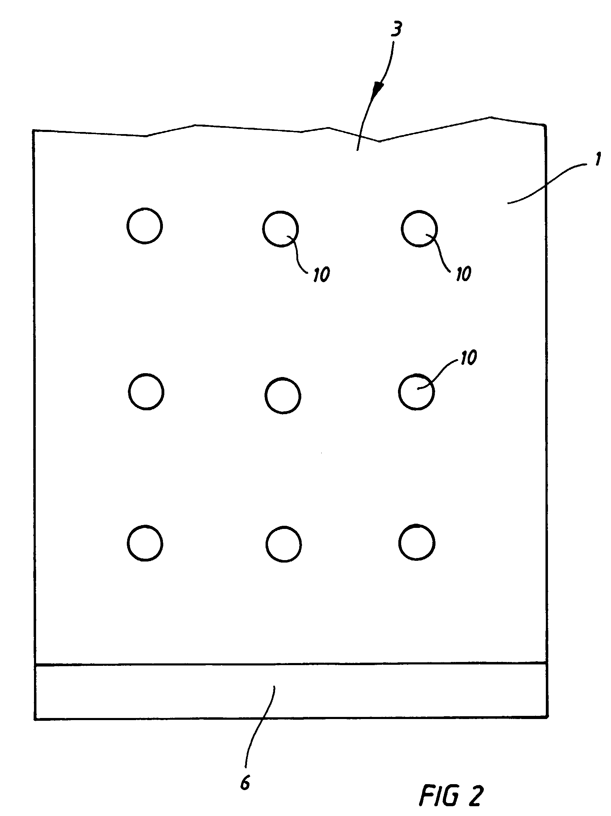

Gemäß den Figuren 1 und 2 besteht das Hitzeschild 3 aus einem Trägerblech 1, auf dem ein Folienpaket 2 angeordnet ist. Das Folienpaket 2 besteht aus einer Mehrzahl von Folien 7,8,9, die alle genoppt sind.

Den oberen Bereich des Folienpakets 2 bildet die Deckfolie 4, die entweder ebenso wie die Folien 7,8,9 ausgebildet ist oder die durchgehend glatt ausgebildet ist und eine größere Dicke aufweist als eine der Folien 7,8.9. Die Deckfolie 4 ist hierbei in einem Zwischenraum 6 eines Bördelrandes 5 am Trägerblech 1 eingeklemmt, womit das gesamte Folienpaket 2 auf dem Trägerblech 1 gehalten wird.

Zur Schaffung eines Luftzwischenraumes 11 ist es erfindungsgemäss vorgesehen, daß in dem Trägerblech Noppen 10 angeordnet sind, die einwärts gerichtet sind und somit das Folienpaket 2 von dem Trägerblech abheben. Hierbei wird es bevorzugt, wenn die Auflagefläche der jeweiligen Noppe 10 an der jeweils inneren Folie 9 möglichst klein gemacht wird, wodurch demgemäss punktförmige Noppen 10 bevorzugt werden, so wie dies in Figur 2 dargestellt ist.
Es wird damit ein großer erster Luftzwischenraum zwischen dem Trägerblech 1 und der direkt benachbarten Folien 9 geschaffen, der eine wesentliche Isolierungswirkung schafft, die ansonsten mit derartigen Folien nicht bewerkstelligt werden kann. Im übrigen wirkt die Hitze in Richtung des Pfeiles II in Figur 1 auf das Trägerblech 1.

Die einzelnen Folien 7,8,9 enden im Randbereich des Folienpakets 2, so daß ein weiterer Luftzwischenraum 12 geschaffen wird, der ebenfalls die Isolierungswirkung in diesem Bereich (Randbereich) gewährleistet.

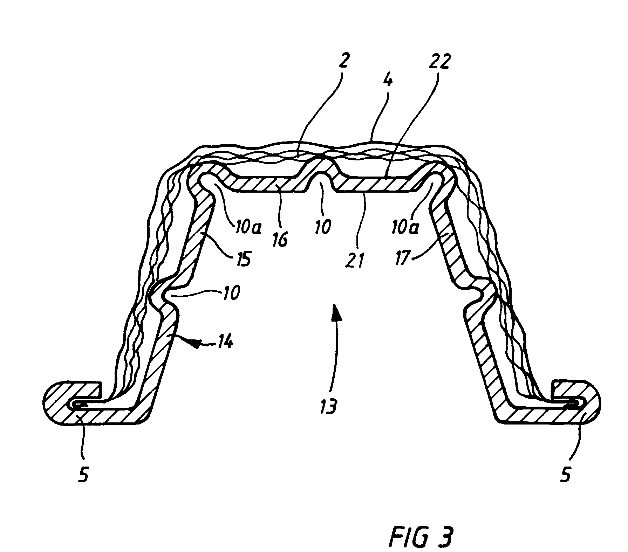

Die Figur 3 zeigt ein weiteres Hitzeschild 13, welches dreidimensional gebogen ist und etwa U-förmig ausgebildet ist, und aus den Schenkeln 15,16,17 besteht. Die Schenkel 15 und 17 bilden an ihren Außenseiten wieder die Bördelränder 5, in welchen das Folienpaket 2 eingeklemmt ist.

Wichtig ist, daß neben den Noppen 10 im Bereich der Schenkel 15,16,17, die in der Art, wie Figur 2 verteilt sind, auch noch weitere Noppen 10a angeordnet sind, die in den Randbereichen, d.h. also im Übergangsbereich zwischen dem jeweiligen Schenkel 15 und 16 bzw. 16,17 angeordnet sind. Auf diese Weise wird in diesen Randbereichen eine abstandshaltende Wirkung zum Folienpaket 2 erreicht und demgemäss die Isolierungswirkung wesentlich verbessert.

Selbstverständlich ist es bei allen Ausführungsformen nicht erforderlich, die Noppen 10 linienförmig oder rasterförmig anzuordnen, sie können auch auf Lücke angeordnet sein.

Ebenso ist es nicht erforderlich, einen gleichmässigen Abstand zwischen den Noppen 10 zu verwirklichen; die Noppen 10 können auch mit ungleichmässigem Abstand im Trägerblech 1 angeordnet werden.

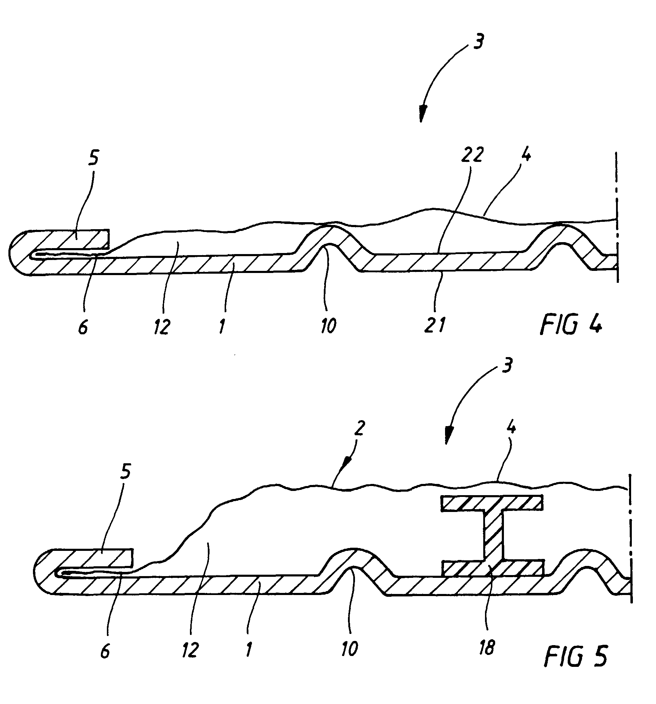

Die Figur 4 zeigt als Abwandlung lediglich ein Hitzeschild 3, welches aus einem Trägerblech 1 und einer darüber angeordneten Deckfolie 4 besteht.

Der isolierende Zwischenraum 12 besteht lediglich aus Luft und enthält keinerlei weitere Einbauten, wie z. B. ein Folienpaket 2.

Bei dieser Ausführungsform kann es lediglich vorgesehen sein, daß die innere Oberfläche 22 hochglanzpoliert wird/oder auch die zur Hitzequelle zugewandte Oberfläche 21.

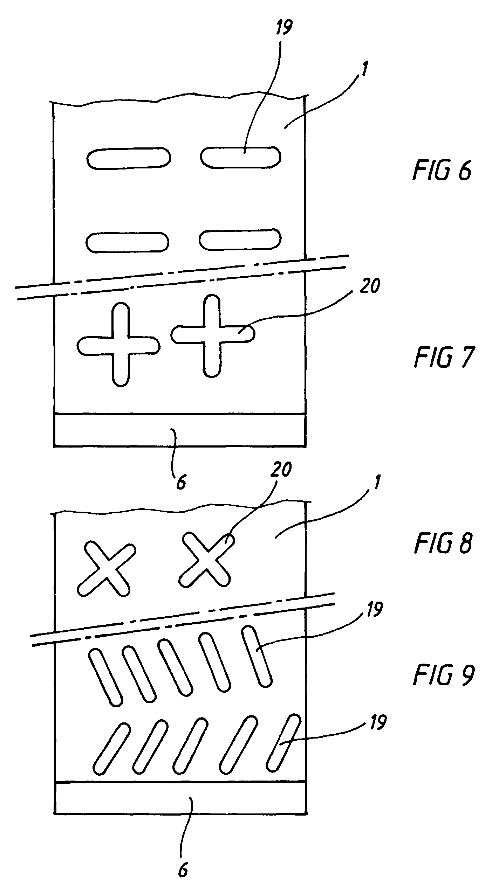

In Figur 5 ist dargestellt, daß in den isolierenden Luftzwischenraum 12 auch Abstandskörper 18 eingebaut sein können.

Diese Abstandskörper können aus Hartschaumteile oder aus anderem Material bestehende, wärmeisolierende Einlegeteile sein.

Diese Abstandskörper kann mit dem Trägerblech 1 verbunden sein (z. B. durch eine Verklebung, Nietung oder dergleichen).

In Figur 6 ist dargestellt, daß statt der punktförmigen Noppen 10,10a auch kurze, in Längsrichtung verlaufende Sicken 19 vorgesehen werden können, die parallel im Abstand zueinander angeordnet sind.

Figur 7 zeigt, daß derartige Sicken 20 auch kreuzförmig ausgebildet sein können.

Die Figur 8 zeigt, daß die Sicken 20 auch schräg zueinander verteilt auf der Oberfläche des Trägerbleches 1 angeordnet sein können und die Figur 9 zeigt, daß die Sicken 19 auch parallel, kreuzweise oder schräg zueinander angeordnet sein können.

Die genannten Noppen 10,10a und die Sicken 19,20 sind stets durch einen Preßvorgang aus dem Material des Trägerbleches 1 herausgepreßt und ragen mindestens teilweise in den isolierenden Luftzwischenraum 11,12 hinein.

Es ist hierbei nicht lösungsnotwendig, daß die Deckfolien 4, gemäß Figur 4 an der jeweiligen Oberfläche der Noppe 10,10a bzw. der Sicke 19,20 anliegt.

Es kann auch vorgesehen sein, daß - wie in Figur 5 gezeigt - die Deckfolie 4 in Abstand zu den Spitzen der Noppen 10 bzw. der Sicken 19,20 angeordnet ist, wobei in Figur 5 die Abstandskörper 18 dann fehlen.

Die Deckfolie 4 ist bei diesem Ausführungsbeispiel mit Abstand von den in den Luftzwischenraum 11,12 hineinragenden Noppen oder Sicken 19,20 angeordnet, wobei im Luftzwischenraum 11,12 jegliche Einbauten fehlen.

In allen genannten Fällen kann es vorgesehen sein, die innere Oberfläche 22 oder die zur Hitzequelle zugewandte Oberfläche 21 des Trägerbleches 1 hochglanzpoliert auszuführen.

Mit der Erfindung ist es damit möglich, eine wesentlich verbesserte Wärmeisolationswirkung zu erreichen.

### Zeichnungslegende

- 1: Trägerblech
- 2: Folienpaket
- 3: Hitzeschild
- 4: Deckfolie
- 5: Bördelrand
- 6: Zwischenraum
- 7: Folie
- 8: "
- 9: "
- 10: Noppe
- 10a: Noppe
- 11: Luftzwischenraum
- 12: "
- 13: Hitzeschild
- 14: Trägerblech
- 15: Schenkel
- 16: "
- 17: "
- 18: Abstandskörper
- 19: Sicke
- 20: "
- 21: Oberfläche
- 22: "

## Patentansprüche

1. Hitzeschild, bestehend aus einem Trägerblech (1), auf dem eine Deckfolie (4) randseitig befestigt ist, und wobei ein isolierender Luftzwischenraum (11,12) zwischen dem Trägerblech (1) und der Deckfolie (4) ausgebildet ist und auf dem Trägerblech (1) abstandshaltende Mittel (10,10a,18 bis 20) ausgebildet sind, **dadurch gekennzeichnet,** daß in den Luftzwischenraum (11,12) ein Folienpaket (2) derart eingelegt ist, daß es nicht mit dem Rand des Trägerblechs (1) in Berührung kommt.

2. Hitzeschild nach Anspruch 1, **dadurch gekennzeichnet**, daß die abstandshaltenden Mittel durch Verformung des Trägerblechs (1) gebildet sind.

3. Hitzeschild nach Anspruch 2, **dadurch gekennzeichnet,** daß die abstandshaltenden Mittel als rundprofilierte Noppen (10) oder als längliche Sicken (19,20) ausgebildet sind.

4. Hitzeschild nach einem der Ansprüche 1 bis 3, **dadurch gekennzeichnet,** daß das Hitzeschild (3) dreidimensional verformt ist.

5. Hitzeschild nach einem der Ansprüche 1 bis 4, **dadurch gekennzeichnet,** daß zur abstandshaltenden Wirkung in den Biegebereichen des Trägerblechs (1) zusätzliche Abstandshalter (10a) vorgesehen sind.

6. Hitzeschild nach einem der Ansprüche 1 bis 5, **dadurch gekennzeichnet,** daß das Trägerblech (1) auf der der Hitze zugewandten Oberfläche (21) hochglanzpoliert ist.

7. Hitzeschild nach einem der Ansprüche 1 bis 6, **dadurch gekennzeichnet,** daß das Trägerblech (1) auch auf seiner den isolierenden Luftzwischenraum (11,12) begrenzenden Oberfläche (22) hochglanzpoliert ist.

8. Verfahren zur Herstellung eines Hitzeschildes mit folgenden Schritten:
- Bereitstellen eines Trägerblechs (1) mit abstandshaltenden Mitteln (10,10a, 18 bis 20),
- Aufbringen eines Folienpakets (2) auf das Trägerblech (1), und
- Einschließen des Folienpakets (2) durch Anbringen einer Deckfolie (4), die randseitig am Trägerblech (1) befestigt wird, wobei das Folienpaket (2) derart eingelegt ist, daß es nicht mit dem Rand des Trägerblechs (8) in Berührung kommt.

9. Verfahren nach Anspruch 8, **dadurch gekennzeichnet,** daß aus der Fläche des Trägerblechs (1) abstandhaltende Noppen (10,10a) herausgepresst werden.

10. Verfahren nach Anspruch 8, **dadurch gekennzeichnet,** daß aus der Fläche des Trägerblechs (1) abstandhaltende Sicken (19,20) herausgepresst werden.

11. Verfahren nach Anspruch 8 bis 10, **dadurch gekennzeichnet,** daß in den isolierenden Luftzwischenraum zwischen Trägerblech (1) und Deckfolie (4) schlecht wärmeleitende Abstandskörper (18) eingebracht werden.

## Claims

1. A heat shield, consisting of a support sheet (1) on which a covering foil (4) is fastened on the edge, and in which an insulating intermediate air space (11, 12) is formed between the support sheet (1) and the covering foil (4) and spacing means (10, 10a, 18 to 20) are formed on the support sheet (1), characterised in that in the intermediate air space (11,12) a foil pack (2) is inserted such that it does not come into contact with the edge of the support sheet (1).

2. The heat shield according to Claim 1, characterised in that the spacing means are formed by deformation of the support sheet (1).

3. The heat shield according to Claim 2, characterised in that the spacing means are constructed as round-profiled knubs (10) or as elongated corrugations (19, 20).

4. The heat shield according to any of Claims 1 to 3, characterised in that the heat shield (3) is shaped three-dimensionally.

5. The heat shield according to any of Claims 1 to 4, characterised in that for the spacing effect, additional spacers (10a) are provided in the bending regions of the support sheet (1).

6. The heat shield according to any of Claims 1 to 5, characterised in that the support sheet (1) is polished to a high mirror finish on the surface (21) facing the heat.

7. The heat shield according to any of Claims 1 to 6, characterised in that the support sheet (1) is also polished to a high mirror finish on its surface (22) delimiting the insulating intermediate air space (11, 12).

8. A method for the production of a heat shield including the following steps:
- providing a support sheet (1) with spacing means (10, 10a, 18 to 20),
- applying a foil pack (2) onto the support sheet (1), and
- enclosing the foil pack (2) by the application of a cover foil (4), which is fastened on the edge to the support sheet (1), in which the foil pack (2) is inserted so that it does not come into contact with the edge of the support sheet (8).

9. The method according to Claim 8, characterised in that spacing knubs (10, 10a) are pressed out from the surface of the support sheet (1).

10. The method according to Claim 8, characterised in that spacing corrugations (19, 20) are pressed out from the surface of the support sheet (1).

11. The method according to Claim 8, 9 or 10, characterised in that spacer members (18) having poor thermal conductivity are introduced into the insulating intermediate air space between support sheet (1) and cover foil (4).

## Revendications

1. Bouclier thermique composé d'une tôle de support (1) sur le bord de laquelle est fixée une feuille de recouvrement (4), une couche d'air isolante (11, 12) étant formée entre la tôle de support (1) et la feuille de recouvrement (4), et des moyens d'écartement (10, 10a, 18 à 20) étant formés sur la tôle de support (1), **caractérisé** en ce qu'un paquet de feuilles (2) est placé dans la couche d'air (11, 12) de manière à ne pas être contact avec le bord de la tôle de support (1).

2. Bouclier thermique selon la revendication 1, **caractérisé** en ce que les moyens d'écartement sont définis par la déformation de la tôle de support (1).

3. Bouclier thermique selon la revendication 2, **caractérisé** en ce que les moyens d'écartement sont conçus comme des bosses à profil rond (10) ou comme des moulures allongées (19, 20).

4. Bouclier thermique selon l'une des revendications 1 à 3, **caractérisé** en ce que le bouclier thermique (3) a subi une déformation tridimensionnelle.

5. Bouclier thermique selon l'une des revendications 1 à 4, **caractérisé** en ce que pour créer l'écartement dans les zones de pliage de la tôle de support (1), on prévoit des écarteurs supplémentaires (10a).

6. Bouclier thermique selon l'une des revendications 1 à 5, **caractérisé** en ce que la tôle de support (1) a subi un polissage spéculaire sur sa surface (21) tournée vers la chaleur.

7. Bouclier thermique selon l'une des revendications 1 à 6, **caractérisé** en ce que la tôle de support (1) a subi un polissage spéculaire également sur sa surface (22) qui délimite la couche d'air isolante (11, 12).

8. Procédé pour fabriquer un bouclier thermique, consistant à :
- prévoir une tôle de support (1) pourvue de moyens d'écartement (10, 10a, 18 à 20),
- appliquer un paquet de feuilles (2) sur la tôle de support (1), et
- enfermer le paquet de feuilles (2) en posant une feuille de recouvrement (4) qui est fixée sur le bord de la tôle de support (1), le paquet de feuilles (2) étant posé de manière à ne pas être en contact avec le bord de la tôle de support (1).

9. Procédé selon la revendication 8, **caractérisé** en ce que des bosses d'écartement (10, 10a) sont formées par emboutissage sur la surface de la tôle de support (1).

10. Procédé selon la revendication 8, **caractérisé** en ce que des moulures d'écartement (19, 20) sont formées par emboutissage sur la surface de la tôle de support (1).

11. Procédé selon les revendications 8 à 10, **caractérisé** en ce que des éléments d'écartement (18) mauvais conducteurs de chaleur sont placés dans la couche d'air isolante entre la tôle de support (1) et la feuille de recouvrement (4).
